# EUROPEAN PATENT SPECIFICATION

(11) **EP 3 522 703 B1**
(45) Date of publication and mention of the grant of the patent: **18.10.2023**
(21) Application number: 17772122.2
(22) Date of filing: 02.08.2017
(51) Int. Cl.: A01K 97/02

(54) **BAIT DISPENSER**
KÖDERSPENDER
DISTRIBUTEUR D'APPÂT

(30) Priority: 05.10.2016 RS P20160836
(43) Date of publication of application: 14.08.2019
(73) Proprietor: CARP SYSTEM DOO, 23 000 Zrenjanin (RS)
(72) Inventor: ZIVKOVIC, Svetislav, Pancevo 26 000 (RS)
(74) Representative: Boult Wade Tennant LLP
(86) International application number: PCT/RS2017/000011
(87) International publication number: WO 2018/067023

(56) References cited:
- WO-A1-2013/153367
- WO-A1-2015/087361
- DE-U1-202014 105 773

## Description

### FIELD OF THE INVENTION

The present invention relates to a bait dispenser, and a method thereof, and especially to a bait dispenser providing means for flushing out bait with water when an angler pulls the bait dispenser back onshore.

### BACKGROUND OF THE INVENTION

An aspect of carp fishing is to distribute bait into the water at a plurality of locations in a lake or river wherein the carp fish is living. This should be done quickly and repeatedly until the angler identifies that the carp fish is coming towards at least some spots on the lake or river surface where the bait has been dispensed.

An angler may attach the bait dispenser to a fishing line, for example at the tail end of the dispenser body, and use a fishing rod to throw the bait dispenser towards a location the angler wants to dispense bait. An aerodynamic shape of the bait dispenser helps stabilizing the bait dispenser through the flight making it more probable that the angler hits the spot of interest on the lake or river surface.

The bait is normally transported inside the body of the bait dispenser, and when the dispenser hits the water surface a lid opens up. Dependent on the design of the locking/unlocking mechanism of the lid, it is often necessary that the nose part of the dispenser body hits the water first to enable the opening of the lid.

When the dispenser hits the water, the inert movement of the bait inside the body of the dispenser moves the bait forward which leads to a situation where the nose part of the dispenser is submerged down into the body of the water while the tail end of the dispenser body is pointing upwards. Then gravity helps unloading the bait out of the dispenser body if the lid has opened up in the water.

GB 2 183131 A discloses a fishing weight comprising a bait-retaining capsule composed of two halves connected together by hinges. The lid part is connected to the fishing line in such a manner that when the fishing line is pulled backwards relative to the fishing weight the lid is closed. This is actually the case when the fishing weight is flying in the air, then the tension in the fishing line will keep the lid fishing weight is flying in the air, then the tension in the fishing line will keep the lid closed. When the fishing weight hits water and stops any movements forward, the line will loose the tension and the lid may open up and the bait may be released. WO 2013/108012 A1 discloses a bait dispenser for use by an angler and comprising a container into which bait can be loaded, the container attachable to a line and arranged to open upon impact with the water, the container comprising first and second container parts (10, 11) hinged together at a rear end thereof, the first container part (10) having a bulkhead (18) toward a distal or bow end thereof, a spring (17) arranged for urging the dispenser open and a plunger assembly (20), the plunger assembly comprising: • a button member (23) with a central shaft (26), and two arms (24, 25) protruding radially from the button member carrying approximate the extremities thereof engagement members (24a, 25a); • a base member (21) detachably attachable to the bulkhead (18) via flanged slide runners (18b) and at least one male/female detent combination (21c, 18c) arranged for retaining the base member to the bulkhead, and a spring (22) on the central shaft (26); • the first and the second container parts (10, 11) defining an access port for the button member; and at least the second container part (11) having a catch (11a) for engaging and holding an arm engagement member (25a). WO 2013/153367 A1, which is considered the closest prior art document to the subject-matter of claim 1, discloses a bait dispenser which is locked and unlocked by means of a locking mechanism which is released by a push button located on the base of the scoop.

There are some issues with prior art solutions related to the locking/unlocking mechanism of lids on respective bait dispenser systems. For example, push button activated latches requires a specific orientation of the push button surface relative to the water surface when the dispenser hits the water. If there is an angle between the push button surface and the water surface, less force is transferred from the impact to the push button mechanism of the dispenser. If the push button mechanism is a loose connection in the meaning that less force is necessary to activate the unlocking, the locking during flight may be unstable making it possible that the bait may fall out of the dispenser during flight.

Another aspect of locking/unlocking mechanisms as known in prior art is the anglers desire to load bait into the compartment of a bait dispenser as quickly as possible to be able to "bombard" an area of a lake with bait. When the bait dispenser hits the surface some noise and waves are generated on the surface. If this is repeated over a longer time period it is probable that the fish disappear form the area. Therefore, enough bait distributed over a shorter time period makes the outcome of the fishing much more certain.

If the angler needs to use both hands during loading of bait into the dispenser, it may be a problem to leave the fishing rod on the ground while opening, filling and closing the bait dispenser. For example, the length of the fishing line needs to be long enough to enable the angler to lay down the fishing rod on the ground and at the same time be able to manipulate the bait dispenser with his both hands. If the fishing line is too long there is a chance that the fishing line may be entangled with other objects on the ground, such as branches etc.

Therefore, a bait dispenser that can be operated by one hand is of great interest to the angler community.

Therefore, it is a need of an improved bait dispenser.

### OBJECT OF THE INVENTION

It is a further object of the present invention to provide an alternative to the prior art. In particular, it may be seen as an object of the present invention to provide an improved bait dispenser facilitating filling of bait as well as emptying bait at the location of interest to an angler.

### SUMMARY OF THE INVENTION

Thus, the above-described object and several other objects are intended to be obtained in a first aspect of the invention by providing a bait dispenser with a lid that can be opened by one hand comprising a limited sliding of a lid covering a bait compartment. The invention is covered by the subject-matter of claim 1; other aspects of the invention are covered by the dependent claims. A method of loading the bait dispenser according to claim 1 is given in claim 10.

The invention is particularly, but not exclusively, advantageous for obtaining a bait dispenser comprising a body constituted by a first body part and a second body part being attached to each other, wherein the first body part comprises a lid and a further body part, wherein
the further body part constitutes a tail end of the body and is attached to an adapted tail end of the second body part,
the body part comprises a forward located compartment housing bait to be dispensed, wherein the lid of the first body part is adapted to cover an opening of the compartment,
the lid is connected via a first arm on a first side of the lid, and a second arm on an opposite located second side of the lid, to respective end surfaces of a rotation axle located transverse on a side of the lid facing towards the further body part,
the rotation axle is supported by opposite located openings on the respective side surfaces of the further body part, such that the arms can move freely over the outside surface of the body when the lid is being opened,
the openings supporting the rotation axle have a larger dimension than the diameter of the rotation axle.

The invention is further advantageous for obtaining a method of loading a bait dispenser according to the present invention, comprising steps of:
- holding the bait dispenser in one hand,
- pushing the lid of the bait dispenser backwards with one finger,
- using the open bait compartments as a spoon and filling the compartment by dipping the bait dispenser inside a bucket comprising bait,
- closing the lid with a finger, and moving the lid forward thereby locking the lid of the bait dispenser.

Respective aspects of the present invention may each be combined with any of the other aspects. These and other aspects of the invention will be apparent from and elucidated with reference to the embodiments described herein.

### DESCRIPTION OF THE FIGURES

Figure 1 illustrates an example of embodiment of the present invention.
Figure 2 illustrates the example of embodiment illustrated in Figure 1 from a different view angle.
Figure 3 illustrates an example of a lid according to the present invention.
Figure 4 illustrates an example of an interior of an example of embodiment of the present invention.
Figure 5 illustrates another example of an interior of an example of embodiment of the present invention.
Figure 6 illustrates a cross sectional view of an example of embodiment of the present invention.
Figure 7 illustrates another cross sectional view of an example of embodiment of the present invention.

### DETAILED DESCRIPTION OF AN EMBODIMENT

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Further, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

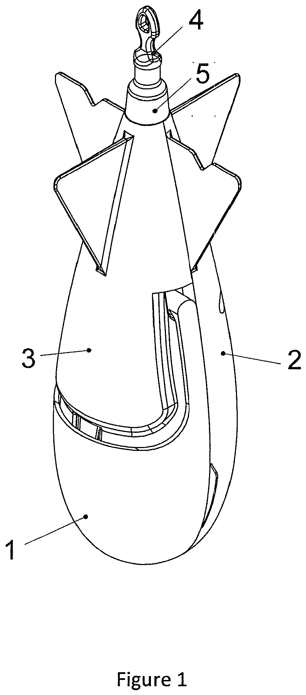

Figure 1 illustrates an example of embodiment of the present invention. A bait dispenser is shaped like a droplet shaped body 5 having aerodynamic properties.

The body comprises a first body part divided in a hinged lid 1 pivotally connected to a section 3 of the first body part that is fixed firmly to the second body part 2. When the lid is closed, the droplet shaped body form is preserved during flight of the bait dispenser through the air.

The lid 1 covers a compartment inside the body 5 housing bait. The bait is released from the compartment when the bait dispenser hits the water. Further details are disclosed below.

The tail end of the body of the bait dispenser comprises stabilizing wings stabilizing the bait dispenser body 5 during flight. At the outmost end of the tail a bracket 4 is attached wherein a fishing line may be connected. An angler may connect the fishing line of a fishing rod to the bracket 4.

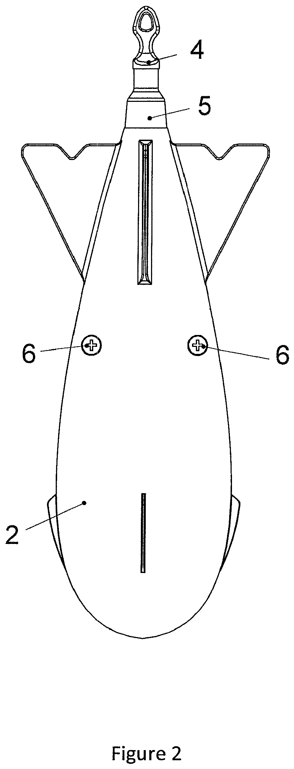

Figure 2 illustrates the backside of the second body part 2. Screws 6 is used to attach the first body part to the second body part.

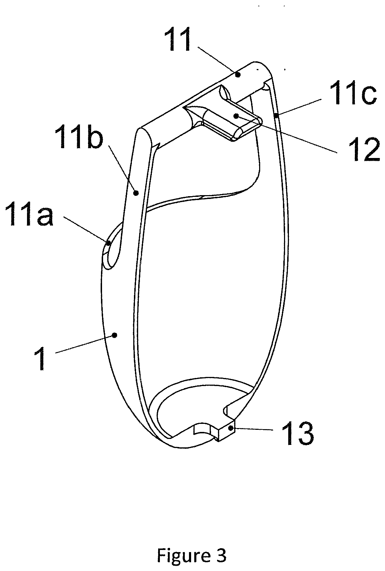

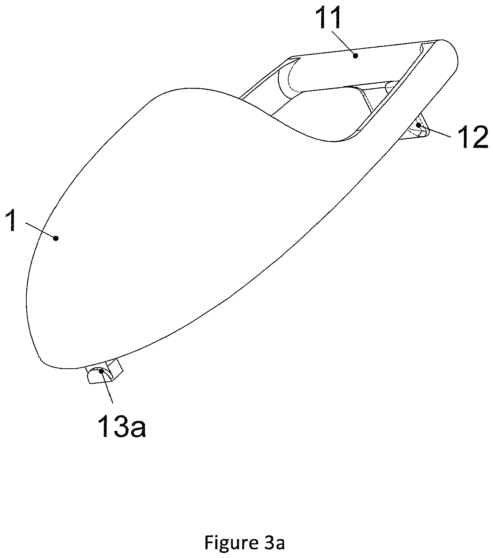

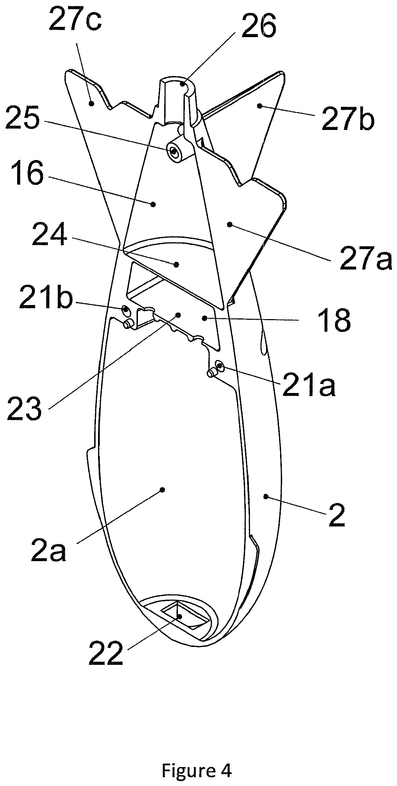

Figure 3 discloses further details of the lid 1. At a rear end of the lid 1 there is arranged a pivot axle 11 being perpendicular to the length direction of the lid 1. On each side of the end surfaces of the pivot axle 11 there are arranged respectively a first extended arm 11b and second extended arm 11c being connected to a backward located edge 11a of the lid 1. In front of the lid 1 there is arranged a locking finger 13 commoving and extended lip engaging an adapted opening 22 in the front of the second body part 2 (refer to Figure 4).

On the pivot axle 11, there is arranged an extended part 12 extending downwards relative to the lid 1. The function of the extended part 12 is to limit the amount of rotation of the lid 1 around the rotation axle 11 when the lid is opened. More details are disclosed below.

Figure 4 discloses an example of embodiment of the interior of the second body part 2. At the front end of the body part the adapted opening 22 is arranged to receive the extended lip 13a of the locking finger 13. The adapted opening 22 is an opening of a closed cavity in the front part of the second body part 2.

At the tail end respective stabilizing wings 27a, 27b, 27c are disclosed. At the outmost end 26 of the tail the bracket 4 illustrated in Figure 1 can be attached.

In the rear of the second body part 2 there is arranged a cavity 16 that has a counterpart at the rear of the body part 3 of the first body part 1. When the body part 3 of the first body part 1 is joined with the second body part 2, there is a closed cavity formed in the rear of the body 5 of the bait dispenser. When the bracket 4 is attached to the body 5 the cavity is water tight. This cavity provides buoyancy when the bait dispenser is floating upwards to the surface after being submerged after being thrown into the water by an angler. Further details are disclosed below.

There is also a further cavity 18 defined by walls or bulkheads 23 and 24. When the lid 1 is assembled, the protruding part 12 on the rotation shaft 11 is protruding down into the interior of the cavity 18. When the rotation shaft 11 is rotated when the lid is rotated, the extended part 12 will hit one of the bulkheads 24, 25 dependent on the direction of rotation. In any case, the walls or bulkheads 24, 25 will limit the amount of possible rotation, and hence limit how much the lid may be opened up.

The cavity 2a of the second body part 2 constitutes the compartment housing bait when using the bait dispenser according to the present invention. Further, it is important to note that the raindrop shape of the body 5 of the bait dispenser provides a scoop like device. This shape facilitates the loading of bait into the compartment 2a. The angler can deep the body of the bait dispenser when the lid 1 is open into a tray comprising bait. The spook shape acts like a spoon simplifying the loading of baits considerably.

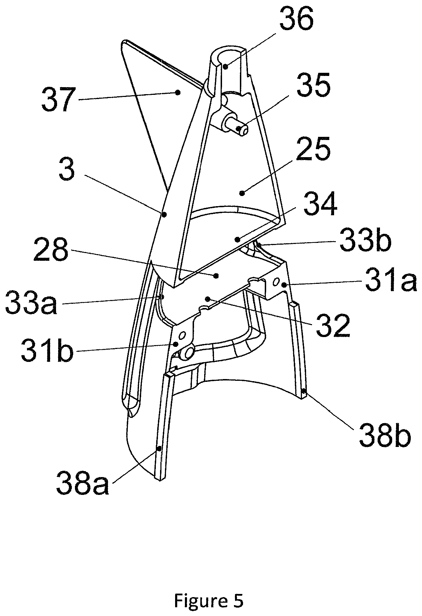

Figure 5 illustrates the interior of the body part 3 of the first body part 1 of the bait dispenser body 5. The rear cavity 25 corresponds to the cavity 16 of the second body part 2. When joined they form a closed cavity providing buoyancy to the body 5 of the bait dispenser.

Between the bulkheads 34 and 28 there is arranged an adapted opening adapted to support the rotation axle 11 of the lid 1 as disclosed in Figure 3. The rotation axle 11 extends outside the openings 33a and 33b on each side of body part 3. This allows the arms 11b and 11c as disclosed in figure 1 to freely rotate upwards and downwards on the outside surface of the body part 3. The openings 33a and 33b have a larger dimension than the diameter of the rotation axle 11. This enables the lid 11 to move a little forward and backwards inside the openings 33a and 33b. More details are disclosed below.

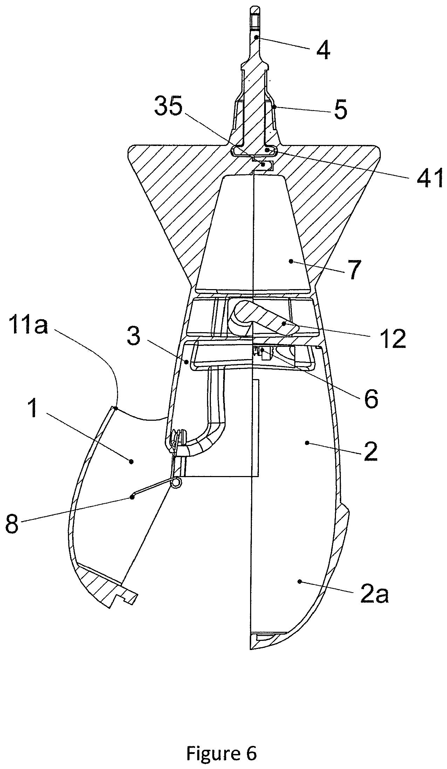

Figure 6 illustrates a cross sectional view of an assembled example of embodiment according to the present invention, wherein the lid 1 is open. A spring 8 is arranged to urge the lid open when the lid 1 is released. In an example of embodiment the upper end of the spring 8 is attached to the inside of the lid 8. Then the opening of the lid is constrained by the spring force. In front to the lid 1 the locking finger 13 and the lip 13a are illustrated. When the bait dispenser hits water, the extended openings 33a and 33 b of Figure 5 enable the lid 1 to move backwards and thereby the locking finger 13 is also moved a little backwards enabling the lip 13a to be free from the receiving chamber 22 arranged in the front of the second body part 22 as illustrated in Figure 4.

Figure 6 illustrates also the ability to tune the amount of the opening of the lid 1. The extending part 12 extending downwards into the restraining chamber will define the maximum amount of rotation of the rotation axle 11 either by the length of the extending part or by the width of the restraining chamber, i.e. the distance between a wall and the extending part, or by modifying both parameters.

If an upper end of the spring 8 is attached to the inside surface of the lid 1, the spring forces are also part of limiting the maximum opening or rotation of the lid 1.

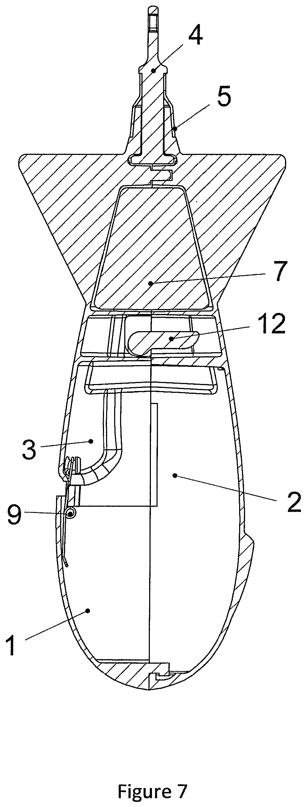

Figure 7 illustrates a cross sectional view of the example of embodiment illustrated in Figure 6.

An important aspect of the present invention is related to the ability to open up the lid 1 when the body 5 of the bait dispenser according to the present invention hits a water surface. The enlarged openings 33a and 33b on the side surfaces of the body part 3 of the first body part 1 play an important role in allowing opening of the lid 1 on impact with water regardless of the angle of impact.

If the body 5 of the bait dispenser according to the present invention hits the water surface with the nose of the dispenser first, the water impact will move the lid 1 backwards inside the enlarged openings 33a and 33b. Thereby the lip 13a of the locking finger 13 will move out of the restraining cavity 22 arranged in the front of the second body part 2. The spring 8 will then force the lid open.

If the body 5 of the bait dispenser 5 falls flat down onto the water surface, i.e. the bottom of the second body part 2 hits the water surface for example, it will induce a shaking force onto the body 5. This shaking of the body 5 is translated into movement of the lid 1. Then the rotation axle 11 will move inside the enlarged openings 33a and 33b on the side of the body part 3. Then with reference to Figure 7 it is most likely that the back end of the lid will at a moment move upwards. Since the lid is locked by the locking finger in front of the lid the connecting point between the lip 13a and the upper surface of the cavity 22 will serve as a rotation point when the back end of the lid 1 moves upwards. Then parts of the lip surface 13a will move downwards and the contact area between the lip surface 13a and the surface of the cavity is reduced and the further shaking will be able to move the lid backwards.

Therefore, the locking/unlocking mechanism according to the present invention allows opening of the lid also when the body 5 of the bait dispenser impacts the water surface with odd angles.

Further, the locking/unlocking mechanism according to the present invention allows an angler to just use one hand when opening the lid (1) just by using a finger to pull the lid backwards, then let the spring (8) urge the lid open and then utilizing the spook like shape of the compartment (2a) to fill bait into the compartment, and then use a finger to close the lid and lock it by pushing the lid forward.

Another important aspect of the present invention is that the locking/unlocking mechanism is not a dominant protruding object inside the cavity 2a of the second body part 2. When the bait dispenser is open and is floating with the front downwards, any obstacle inside the cavity 2a may stop bait from leaving the cavity 2a.

Further, the arms 11b and 11c of the lid 1 provide also another technical effect in view of emptying the cavity 2a. With reference to Figure 6, it is clearly illustrated that the backward edge 11c of the lid 1 is well above the upper surface of the body part 3. Thereby there is an opening between the inner lid surface and the interior of the cavity 2a. When the bait dispenser is pulled back onshore by an angler, the lid will catch water, and the edge 11c will guide water inside the cavity 2a thereby flushing the cavity 2a with water thereby emptying residual bait left in the cavity. The effect starts immediately when the pulling starts which ensures that the final emptying of baits takes place at the intended location.

According to an example of embodiment of the present invention, bait dispenser comprises a body (5) constituted by a first body part and a second body part (2) being attached to each other, wherein the first body part comprises a lid (1) and a further body part (3), wherein the further body part (3) constitute a tail end of the body (5) and is attached to an adapted tail end of the second body part (2), the body part (2) comprises a forward located compartment (2a) housing bait to be dispensed, wherein the lid (1) of the first body part is adapted to cover an opening of the compartment (2a),the lid (1) is connected via a first arm (11b) on a first side of the lid (11), and a second arm (11c) on an opposite side of the lid (11) to respective end surfaces of a rotation axle (11) located transverse on a side of the lid (1) facing towards the further body part (3),the rotation axle (11) is supported inside opposite located openings (33a, 33b) on the side surfaces of the further body part (3), thereby the arms (11c, 11b) can move freely over the outside surface of the body (5) when the lid is opened, the openings (33a, 33b) supporting the rotation axle (11) have a larger dimension than the diameter of the rotation axle (11).

Further, the bait dispenser may be arranged with a backward located edge (11a) of the lid (1) facing towards the further body part (3) being located above the outer surface of the further body part (3) when the lid (1) is opened.

Further, a locking/unlocking device of the lid (1) may comprise a locking finger (13) with an outwardly extending lip (13a) being adapted to engage a surface of a cavity arranged in the front of the second body part (2).

Further, a spring (8) may be arranged in between the inner surface of the lid (1) and the further body part (3) across the backward located edge (11a) of the lid (1) thereby urging the lid (1) open when unlocking the lid (1).

Further, a rotation limiting extended element (12) may be attached to the rotation axel (11), and wherein the element (12) is extending downwards into a cavity defined by walls or bulkheads (28, 34) arranged in the second body part (2), wherein the walls or bulkheads abut the extended element (12) when the axle (11) is rotated.

Further, a closed chamber may be arranged inside the tail end of the body (5) of the bait dispenser providing buoyancy of the bait dispenser when the dispenser is deployed in water.

Further, a bracket 4 may be arranged at the back of the tail of the body (5), wherein a fishing line can be connected.

Further, the tail end may be arranged with guiding wings.

Further, the lid (1) may be flush with the further body part (3) when the lid (1) is closed.

Further, the opening above the outer surface of the further body part (3) and the edge (11a) of the lid (1) may be adapted to guide water inside the bait compartment (2a) of the second body part (2) when the bait dispenser is pulled backwards onshore after use.

According to an example of embodiment of the present invention, a method of loading a bait dispenser according to the present invention, comprises steps of:
- holding the bait dispenser in one hand,
- pushing the lid (1) of the bait dispenser backwards with one finger,
- using the open bait compartment (2a) as a spoon and filling the compartment by dipping the bait dispenser inside a bucket comprising bait,
- closing the lid (1) with a finger, and moving the lid (1) forward thereby locking the lid of the bait dispenser.

## Claims

1. A bait dispenser comprising a body (5) having a raindrop shape providing a scoop like device and constituted by a first body part and a second body part (2) being attached to each other, wherein the first body part comprises a lid (1) and a further body part (3), wherein
the further body part (3) constitutes a tail end of the body (5) and is attached to an adapted tail end of the second body part (2), the lid (1) is part of a front end of the bait dispenser,
the body part (2) comprises a forward located compartment (2a) housing bait to be dispensed, wherein the lid (1) of the first body part is adapted to cover an opening of the compartment (2a),
the lid (1) is connected via a first arm (11b) on a first side of the lid, and a second arm (11c) on an opposite located second side of the lid (1), to respective end surfaces of a rotation axle(11) located transversally on a side of the lid (1) facing towards the further body part (3),
the rotation axle (11) is supported by opposite located openings (33a, 33b) on the respective side surfaces of the further body part (3), such that the arms (11c, 11b) can move freely over the outside surface of the body (5) when the lid is being opened,
the openings (33a, 33b) supporting the rotation axle (11) have a larger dimension than the diameter of the rotation axle (11), wherein a locking/unlocking mechanism of the lid (1) comprises a locking finger (13) with an outwardly extending lip (13a) being adapted to engage a surface of a cavity arranged in the front of the second body part (2).

2. The bait dispenser according to claim 1, wherein a backward located edge (11a) of the lid (1) facing towards the further body part (3) is located above the outer surface of the further body part (3) when the lid (1) is opened.

3. The bait dispenser according to claim 1, wherein a spring (8) is arranged in between the inner surface of the lid (1) and the further body part (3) across the backward located edge (11a) of the lid (1) thereby urging the lid (1) open when unlocking the lid (1).

4. The bait dispenser according to claim 1, wherein a rotation limiting extended element (12) is attached to the rotation axel (11), and
wherein the element (12) is extending downwards into a cavity defined by walls or bulkheads (28, 34) arranged in the second body part (2), wherein the walls or bulkheads abut the extended element (12) when the axle (11) is rotated.

5. The bait dispenser according to claim 1, wherein a chamber is arranged inside the tail end of the body (5) of the bait dispenser, wherein the chamber can be a closed chamber and/or is filled with a light material providing buoyancy of the bait dispenser when the dispenser is deployed in water.

6. The bait dispenser according to claim 1, wherein a bracket (4) is arranged at the back of the tail of the body (5), wherein a fishing line can be connected.

7. The bait dispenser according to claim 1, wherein the tail end is arranged with guiding wings.

8. The bait dispenser according to claim 1, wherein the lid (1) is flush with the further body part (3) when the lid (1) is closed

9. The bait dispenser according to claim 2, wherein the opening above the outer surface of the further body part (3) and the backward located edge (11a) of the lid (1) facing towards the further body part (3) are adapted to guide water inside the bait compartment (2a) of the second body part (2) when the bait dispenser is pulled backwards onshore after use.

10. A method of loading a bait dispenser according to any claim 1-9 with bait, comprising:
- holding the bait dispenser in one hand with the tail end facing backwards,
- pushing the lid (1) of the bait dispenser backwards with a finger,
- using the open bait compartment (2a) as a spoon and filling the compartment by dipping the bait dispenser inside a bucket comprising bait,
- closing the lid (1) with a finger, and moving the lid (1) forward thereby locking the lid of the bait dispenser.

## Patentansprüche

1. Lockstoff-Spender mit einem Gehäuse (5) in Regentropfenform, das eine löffelähnliche Vorrichtung bereitstellt und durch einen ersten Gehäuseteil und einen zweiten Gehäuseteil (2) gebildet wird, die aneinander befestigt sind, wobei der erste Gehäuseteil einen Deckel (1) sowie einen zusätzlichen Gehäuseteil (3) umfasst, wobei
der zusätzliche Gehäuseteil (3) ein Endstück des Gehäuses (5) bildet und an einem angepassten Endstück des zweiten Gehäuseteils (2) befestigt ist, wobei der Deckel (1) Teil einer Frontpartie des Lockstoff-Spenders ist,
der zweite Gehäuseteil (2) ein vorne angeordnetes Fach (2a) umfasst, das auszugebenden Lockstoff aufnimmt, wobei der Deckel (1) des ersten Gehäuseteils geeignet ist, eine Öffnung des Fachs (2a) abzudecken,
der Deckel (1) über einen ersten Arm (11b) auf einer ersten Seite des Deckels und über einen zweiten Arm (11c) auf einer gegenüberliegend angeordneten zweiten Seite des Deckels (1) mit jeweiligen Endflächen einer Rotationsachse (11) verbunden ist, die schräg auf einer Seite des Deckels (1) angeordnet ist, der in Richtung des zusätzlichen Gehäuseteils (3) zeigt,
die Rotationsachse (11) durch gegenüberliegend angeordnete Öffnungen (33a, 33b) auf den jeweiligen Seitenflächen des zusätzlichen Gehäuseteils (3) derart gestützt wird, dass sich die Arme (11c, 11b) frei über die Außenfläche des Gehäuses (5) bewegen können, wenn der Deckel geöffnet wird, wobei die die Rotationsachse (11) stützenden Öffnungen (33a, 33b) eine größere Abmessung aufweisen als der Durchmesser der Rotationsachse (11), wobei ein Verriegelungs-/Entriegelungsmechanismus des Deckels (1) einen Verriegelungshebel (13) mit einem sich nach außen erstreckenden Ansatz (13a) umfasst, der zum Eingriff mit einer Hohlraumfläche ausgelegt ist, die in der Vorderseite des zweiten Gehäuseteils (2) angeordnet ist.

2. Lockstoff-Spender nach Anspruch 1, wobei eine hinten angeordnete Kante (11a) des Deckels (1), die in Richtung des zusätzlichen Gehäuseteils (3) zeigt, über der Außenfläche des zusätzlichen Gehäuseteils (3) angeordnet ist, wenn der Deckel (1) geöffnet ist.

3. Lockstoff-Spender nach Anspruch 1, wobei eine Feder (8) zwischen der Innenfläche des Deckels (1) und dem zusätzlichen Gehäuseteil (3) quer über die hinten angeordnete Kante (11a) des Deckels (1) angeordnet ist, wodurch der Deckel (1) offen gedrückt wird, wenn der Deckel (1) entriegelt wird.

4. Lockstoff-Spender nach Anspruch 1, wobei ein rotationsbegrenzendes verlängertes Bauteil (12) an der Rotationsachse (11) befestigt ist, und
wobei das Bauteil (12) sich nach unten in einen Hohlraum erstreckt, der durch Wände oder Schotten (28, 34) begrenzt ist, die in dem zweiten Gehäuseteil (2) angeordnet sind, wobei die Wände oder Schotten an das verlängerte Bauteil (12) anstoßen, wenn sich die Achse (11) dreht.

5. Lockstoff-Spender nach Anspruch 1, wobei eine Kammer in dem hinteren Ende des Gehäuses (5) des Lockstoff-Spenders angeordnet ist, wobei die Kammer eine geschlossene Kammer sein kann und/oder mit einem leichten Material gefüllt wird, das einen Auftrieb des Lockstoff-Spenders bereitstellt, wenn der Spender im Wasser eingesetzt wird.

6. Lockstoff-Spender nach Anspruch 1, wobei eine Halterung (4) hinten am Ende des Gehäuses (5) angeordnet ist, wobei eine Angelschnur befestigt werden kann.

7. Lockstoff-Spender nach Anspruch 1, wobei das hintere Ende mit Lenkflügeln ausgestaltet ist.

8. Lockstoff-Spender nach Anspruch 1, wobei der Deckel (1) mit dem zusätzlichen Gehäuseteil (3) bündig ist, wenn der Deckel (1) geschlossen ist.

9. Lockstoff-Spender nach Anspruch 2, wobei die Öffnung über der Außenfläche des zusätzlichen Gehäuseteils (3) und die hinten angeordnete Kante (11a) des Deckels (1), der in Richtung des zusätzlichen Gehäuseteils (3) zeigt, ausgelegt sind, Wasser in das Lockstoff-Fach (2a) des zweiten Gehäuseteils (2) zu leiten, wenn der Lockstoff-Spender nach Einsatz zurück an Land gezogen wird.

10. Verfahren zur Befüllung eines Lockstoff-Spenders nach einem der Ansprüche 1 bis 9 mit einem Lockstoff, wobei das Verfahren umfasst:
- Halten des Lockstoff-Spenders in einer Hand, wobei das hintere Ende nach hinten zeigt,
- Schieben des Deckels (1) des Lockstoff-Spenders mit einem Finger nach hinten,
- Benutzen des geöffneten Lockstoff-Fachs (2a) als Löffel und Befüllen des Fachs, indem der Lockstoff-Spender in einen Behälter eingetaucht wird, der den Lockstoff enthält,
- Schließen des Deckels (1) mit einem Finger, und Bewegen des Deckels (1) nach vorne, wodurch der Deckel des Lockstoff-Spenders verriegelt wird.

## Revendications

1. Distributeur d'appât comprenant un corps (5) en forme de goutte de pluie formant un dispositif analogue à une boule et constitué d'une première partie de corps et d'une seconde partie de corps (2) étant fixées l'une à l'autre, dans lequel la première partie de corps comprend un couvercle (1) et une partie de corps supplémentaire (3), dans lequel
la partie de corps supplémentaire (3) constitue une extrémité de queue du corps (5) et est fixée à une extrémité de queue adaptée de la seconde partie de corps (2), le couvercle (1) fait partie d'une extrémité avant du distributeur d'appât,
la partie de corps (2) comprend un compartiment (2a) situé à l'avant logeant un appât à distribuer, dans lequel le couvercle (1) de la première partie de corps est adapté pour recouvrir une ouverture du compartiment (2a),
le couvercle (1) est relié via un premier bras (11b) sur un premier côté du couvercle, et un second bras (11c) sur un second côté situé à l'opposé du couvercle (1), à des surfaces d'extrémité respectives d'un axe de rotation (11) situé transversalement sur un côté du couvercle (1) faisant face à la partie de corps supplémentaire (3),
l'axe de rotation (11) est supporté par des ouvertures situées opposées (33a, 33b) sur les surfaces latérales respectives de la partie de corps supplémentaire (3), de sorte que les bras (11c, 11b) peuvent se déplacer librement sur la surface extérieure du corps (5) lorsque le couvercle est ouvert, les ouvertures (33a, 33b) supportant l'axe de rotation (11) présentent une dimension plus grande que le diamètre de l'axe de rotation (11), dans lequel un mécanisme de verrouillage/déverrouillage du couvercle (1) comprend un doigt de verrouillage (13) avec une lèvre s'étendant vers l'extérieur (13a) étant adaptée pour venir en prise avec une surface d'une cavité agencée à l'avant de la seconde partie de corps (2).

2. Distributeur d'appât selon la revendication 1, dans lequel un bord situé à l'arrière (11a) du couvercle (1) faisant face à la partie de corps supplémentaire (3) est situé au-dessus de la surface extérieure de la partie de corps supplémentaire (3) lorsque le couvercle (1) est ouvert.

3. Distributeur d'appât selon la revendication 1, dans lequel un ressort (8) est agencé entre la surface intérieure du couvercle (1) et la partie de corps supplémentaire (3) à travers le bord situé en arrière (11a) du couvercle (1), en poussant ainsi le couvercle (1) à s'ouvrir lors d'un déverrouillage du couvercle (1).

4. Distributeur d'appât selon la revendication 1, dans lequel un élément étendu de limitation de rotation (12) est fixé à l'axe de rotation (11), et
dans lequel l'élément (12) s'étend vers le bas jusque dans une cavité définie par des parois ou des cloisons (28, 34) agencées dans la seconde partie de corps (2), dans lequel les parois ou cloisons viennent en butée contre l'élément étendu (12) lorsque l'axe (11) est mis en rotation.

5. Distributeur d'appât selon la revendication 1, dans lequel une chambre est agencée à l'intérieur de l'extrémité de queue du corps (5) du distributeur d'appât, dans lequel la chambre peut être une chambre fermée et/ou est remplie d'un matériau léger assurant la flottabilité du distributeur d'appât lorsque le distributeur est déployé dans l'eau.

6. Distributeur d'appât selon la revendication 1, dans lequel un support (4) est agencé à l'arrière de la queue du corps (5), dans lequel une ligne de pêche peut être reliée.

7. Distributeur d'appât selon la revendication 1, dans lequel l'extrémité de queue est agencée avec des ailes de guidage.

8. Distributeur d'appât selon la revendication 1, dans lequel le couvercle (1) affleure la partie de corps supplémentaire (3) lorsque le couvercle (1) est fermé.

9. Distributeur d'appât selon la revendication 2, dans lequel l'ouverture au-dessus de la surface extérieure de la partie de corps supplémentaire (3) et le bord situé vers l'arrière (11a) du couvercle (1) faisant face à la partie de corps supplémentaire (3) sont adaptés pour guider l'eau à l'intérieur du compartiment d'appât (2a) de la seconde partie de corps (2) lorsque le distributeur d'appât est tiré vers l'arrière sur terre après utilisation.

10. Procédé de chargement d'un appât dans un distributeur d'appât selon l'une quelconque des revendications 1 à 9, comprenant les étapes consistant à :
- tenir le distributeur d'appâts d'une main avec l'extrémité de queue tournée vers l'arrière,
- repousser d'un doigt le couvercle (1) du distributeur d'appât vers l'arrière,
- utiliser le compartiment d'appât ouvert (2a) comme une cuillère et remplir le compartiment en plongeant le distributeur d'appât à l'intérieur d'un seau comprenant un appât,
- fermer le couvercle (1) avec un doigt et déplacer le couvercle (1) vers l'avant, en verrouillant ainsi le couvercle du distributeur d'appât.
